Europäisches Patentamt

(19) European Patent Office

Office européen des brevets

(11) Veröffentlichungsnummer : **0 148 300**
**B1**

(12) EUROPÄISCHE PATENTSCHRIFT

(45) Veröffentlichungstag der Patentschrift :
05.04.89

(51) Int. Cl.⁴ : **A 23 C   9/127**

(21) Anmeldenummer : 84100193.6

(22) Anmeldetag : 10.01.84

(54) Verfahren zum Herstellen von Kefir.

(43) Veröffentlichungstag der Anmeldung :
17.07.85 Patentblatt 85/29

(45) Bekanntmachung des Hinweises auf die Patenterteilung : 05.04.89 Patentblatt 89/14

(84) Benannte Vertragsstaaten :
AT BE CH FR IT LI LU NL

(56) Entgegenhaltungen :
DE--C-- 646 669
FR--A-- 1 349 300
FR--A-- 2 118 105
SOVIET INVENTIONS ILLUSTRATED, SECTION CHE-
MICAL, Woche B12, 3. Mai 1979, Nr. 23469B/12,
Derwent Publications, London, GB
CHEMICAL ABSTRACTS, Band 87, Nr. 11, 12. September 1977, Seite 463, Nr. 83304x, Columbus, Ohio, US;
C. MOULIN u.a.: "Remarks on the production of
kefir"
MICROBIOLOGY ABSTRACTS, SECTION A, INDUS-
TRIAL AND APPLIED MICROBIOLOGY, Band 11, Nr.
23, März 1976, Nr. 11A1224; G. OTTOGALLI: "Microbiological and chemical composition and ultrastructure of kefir granules"

(73) Patentinhaber : SANOFI BIO-INDUSTRIES GMBH
Kanzlerstrasse 6
D-4000 Düsseldorf 30 (DE)

(72) Erfinder : SANOFI BIO-INDUSTRIES GMBH
Kanzlerstrasse 6
D-4000 Düsseldorf 30 (DE)

(74) Vertreter : Patentanwälte Grünecker, Kinkeldey,
Stockmair & Partner  –
Maximilianstrasse 58
D-8000 München 22 (DE)

## Beschreibung

Die Erfindung bezieht sich auf ein Verfahren zum Herstellen von Kefir durch Beimpfen eines Milchausgangsmaterials mit Mikroorganismuskulturen.

Die ursprüngliche Kefirflora ist eine Mischkultur aus homo- und heterofermentativen Stäbchenbakterien und Hefezellen sowie bestimmter Streptococcen. Durch die bakterielle Milchsäuregärung erhalten die Kefirprodukte den erwünschten Säuregrad und durch die alkoholische Gärung der Hefe den typischen Geschmack und Alkoholgehalt.

Bei der alkoholischen Gärung produzieren die Hefen $CO_2$-Gase, wodurch bei den Fertigpackungen die Gefahr der Bombage entsteht, die wiederum Verpackungs- und Haltbarkeitsprobleme nach sich zieht. Auch tendiert der Käufer dazu, bombierte Ware nicht mehr zu kaufen, obwohl die Bombage nicht unbedingt ein Indiz für ein nicht mehr ausreichend gutes Produkt ist. Die molkereimäßige Herstellung von Kefir ist somit durch die erhebliche Gasbildung durch die Hefen erschwert.

Es wurde daher ein sogenannter Molkereikefir entwickelt, bei dem die Starterkulturen nur noch Teilkomponenten der ursprünglichen Kefirflora aufwiesen. Insbesondere hat man versucht, Kefir nur mit sehr geringen Hefeanteilen oder sogar ganz ohne Hefe herzustellen. Das Milchgesetz schreibt jedoch « spezifische Gärungserreger », darunter auch Hefen, für Kefirprodukte vor, so daß Kefirprodukte ohne Hefen gegen das Gesetz verstoßen. Von den Autoren Kandler und Kunath (« Mikrobiologie von Molkereikefir und Körnerkefir », MiniReport der Kieler Milchwoche 1980, 24. bis 28. März 1980) wurde daher festgestellt, daß Kefir im Sinne des Gesetzes wegen der Probleme der Gasbildung und Verhefung als normales Handelsprodukt nicht herstellbar sei. Die Autoren schlagen als Ausweg eine Novellierung des Gesetzes vor, wonach auch die Anwesenheit von Teilkomponenten der Kefirflora ausreichen sollte.

Der Erfindung liegt die Aufgabe zugrunde, ein Verfahren zum Herstellen von Kefir durch Beimpfen eines Milchausgangsmaterials mit Mikroorganismuskulturen bereitzustellen, das die gesetzlich geforderte Kefirflora enthält und dennoch die Bildung von $CO_2$-Gasen soweit reduziert ist, daß keine Verpackungs- und Haltbarkeitsprobleme mehr auftreten.

Diese Aufgabe wird, ausgehend von einem Verfahren laut Oberbegriff des Hauptanspruchs, dadurch gelöst, daß das Milchausgangsmaterial mit einer ersten Kultur, enthaltend allgemein erhältliche, für die Kefirherstellung spezifische, Bakterienstämme der Gattungen Streptococcus und Lactobacillus beimpft und bis zu einem End-pH-Wert von etwa 4,5 bis 4,3, vorzugsweise etwa 4,4 bebrütet und danach gekühlt wird und dieser Kefirsauermilch sodann eine zweite Kultur (DSM 2533), enthaltend einen Stamm der Hefeart Candida kefyr und einen Stamm der Bakterienart Lactobacillus brevis zugemischt wird, wobei die erste Kultur hergestellt wird, indem ein Milchnährsubstrat mit einem, die bezüglich der ersten Kultur genannten Stämme enthaltenden Konzentrat einer Zelldichte von etwa $10^8$ bis $10^{12}$ pro ml in einem Volumenverhältnis von etwa 100 : 1 bis 10.000 : 1, vorzugsweise 1000 : 1 beimpft und bis zu einem End-pH-Wert von 4,5 bis 4,3, vorzugsweise 4,4 bebrütet wird und die zweite Kultur hergestellt wird, indem ein Milchnährsubstrat mit einem, die bezüglich der zweiten Kultur genannten Stämme enthaltenden Konzentrat einer Zelldichte von etwa $10^8$ bis $10^{12}$ pro ml in einem Volumenverhältnis von etwa 100 : 1 bis 10.000 : 1, vorzugsweise 1000 : 1 beimpft und bis zu einem End-pH-Wert von etwa 4,0 bis 3,5, vorzugsweise 3,7 bebrütet wird.

Durch das erfindungsgemäße Verfahren kann erstmals Kefir im Sinne des Gesetzes als normales Handelsprodukt hergestellt werden. Dies wird ermöglicht durch die neue und erfinderische Kefir-Hefen-Kultur KL-B, die die beiden Mikroorganismen Candida kefyr und Lactobacillus brevis enthält und bei der Hinterlegungsstelle « Deutsche Sammlung von Mikroorganismen » als anerkannte Hinterlegungsstelle im Sinne des Budapester Vertrags über die internationale Anerkennung der Hinterlegung von Mikroorganismen für die Zwecke von Patentverfahren unter der Nr. DSM 2533 rechtzeitig vor dem Einreichen der vorliegenden Patentanmeldung hinterlegt worden ist.

Der in dieser hinterlegten Mischkultur enthaltene Hefestamm entwickelt, im Gegensatz zu den mesophilen Kefir-Hefen des Standes der Technik, bei Temperaturen von etwa 33° bis 31 °C die größte physiologische Aktivität. Die alkoholische Gärung dieses Hefestammes mit der unerwünschten Begleiterscheinung der Bildung von $CO_2$-Gasen läuft somit bei verhältnismäßig hohen Temperaturen unter definierten Bedingungen ab. Gleichzeitig säuert der begleitende Bakterienstamm Lactobacillus brevis bei diesen Temperaturen das Milchnährsubstrat verhältnismäßig stark, nämlich bis zu einem pH-Wert von 3,7 an. Da der erfindungsgemäße Hefestamm bei Temperaturen unter 31 °C nahezu keine alkoholische Gärung durchführt, wird bei diesen Temperaturen nahezu kein $CO_2$ mehr gebildet. Die erfindungsgemäße Mischkultur wird daher in der Weise eingesetzt, daß zwar die gesetzlich geforderte Hefeflora vorhanden ist und die alkoholische Gärung durchgeführt wird, jedoch nicht mehr zu einem unerwünschten Zeitpunkt, nämlich in der fertigen Packung. Um dies zu erreichen, wird somit eine Hefekultur unter Temperaturbedingungen, die für die erfindungsgemäße Hefe optimal sind, nämlich bei etwa 31° bis 33 °C hergestellt, bei der die Hefe die gewünschte optimale Aktivität entfaltet. Diese Kultur wird sodann einer anderen Kultur zugemischt, in der die weiteren Teilkomponenten der Kefirflora enthalten sind und die auf eine Temperatur abgekühlt ist, beispielsweise etwa 5 bis 15 °C, bei der die erfindungsgemäßen Hefen nur wenig physiologisch aktiv sind und somit die unerwünschte $CO_2$-Bildung weitgehend unterbleibt.

Neben der ersichtlich einfachen und sicheren Handhabung des Verfahrens liegen die Vorteile im Erzielen der typischen Kefir-Eigenschaften, nämlich dem typischen Geschmack sowie dem Alkoholgehalt. Die Kefirflora entspricht den gesetzlichen Vorschriften und dennoch bleibt die Bombage bei den Fertigpackungen aus.

Durch die Verwendung der speziellen, erfindungsgemäßen Mischung von Stäbchen- und Kokkenbakterien weist das fertige Kefirprodukt zusätzlich einen wünschenswert hohen Gehalt an L(+)-Milchsäure von mindestens 70 bis 90 % auf.

Dies ist besonders erstrebenswert, da zahlreiche Untersuchungen in jüngster Zeit zeigten, daß linksdrehende Milchsäure, die nicht im menschlichen Körper selbst hergestellt wird und daher unphysiologisch für den menschlichen Körper ist, unter Umständen eine Belastung des Zellstoffwechsels beim Menschen darstellen kann. Es sind daher vom medizinischen Standpunkt aus in zunehmendem Maße Bedenken gegen linksdrehende Milchsäure geäußert worden. Die Weltgesundheitsorganisation WHO empfiehlt daher, die tägliche Aufnahme von D (-)-Milchsäure auf 100 mg/kg Körpergewicht zu beschränken. Von einigen Autoren wird selbst diese Menge bereits als zu hoch erachtet.

Die Verwendung der erfindungsgemäßen Kulturenmischungen in dem erfindungsgemäßen Verfahren zun Herstellen von Kefir ermöglicht somit die Verwirklichung einer Kombination von Vorteilen, wie sie bisher beim sogenannten Molkereikefir nicht möglich waren, da sich der Molkereikefir von dem aus den sogenannten Kefirkörnern hergestellten Kefir insbesondere durch das Fehlen der Stäbchenbakterien und in der Regel auch der Hefen unterscheidet.

Für eine ausreichende Offenbarung des erfindungsgemäßen Verfahrens wurde, wie oben bereits ausgeführt, die Mikroorganismusmischung der zweiten Kultur hinterlegt. Sämtliche Bakterienarten, die in der ersten Kultur enthalten sind, sind auf eine dem Fachmann bekannte Weise durch den Handel oder von Hinterlegungsstellen zu beziehen.

Besonders gute Ergebnisse bei der Herstellung des Kefir werden erzielt, wenn die erste Kultur die im Anspruch 2 genannten Bakterienstämme, nämlich

Streptococcus lactis
Streptococcus cremoris
Streptococcus diacetilactis
Streptococcus thermophilus
Lactobacillus acidophilus
Lactobacillus brevis Typ I und Typ II
Lactobacillus lactis

enthält. Diese Zusammensetzung verschiedener Arten der Gattungen Streptococcus und Lactobacillus ist für die Kefirherstellung spezifisch und entspricht den gesetzlichen Anforderungen.

Besonders gleichmäßige und reproduzierbare Ergebnisse erhält man bei der Kefirherstellung, wenn die erste Kultur in der Weise hergestellt wird, daß etwa 300 bis 800 l eines Milchnährsubstrates mit etwa 500 ml eines, die bezüglich der ersten Kultur genannten Stämme enthaltenden Konzentrats einer Zelldichte von etwa $10^8$ bis $10^{12}$ pro ml beimpft und bis zu einem End-pH-Wert von 4,5 bis 4,4, vorzugsweise 4,4 bebrütet wird und die zweite Kultur hergestellt wird, indem etwa 20 bis 100 l eines Milchnährsubstrates mit etwa 80 ml eines die bezüglich der zweiten Kultur genannten Stämme enthalten Konzentrats einer Zelldichte $10^8$ bis $10^{12}$ pro ml beimpft und bis zu einem End-pH-Wert von etwa 4,0 bis 3,5, vorzugsweise 3,7, bebrütet wird.

In der Praxis der großtechnischen Kefirherstellung haben sich diese Mengenverhältnisse als sehr zuverlässig im Hinblick auf die Qualität des Endprodukts erwiesen.

In besonders bevorzugter Weise sind die geschilderten Vorteile des erfindungsgemäßen Verfahrens zu verwirklichen, wenn das Milchausgangsmaterial mit 1 bis 10, vorzugsweise 2 %, der ersten Kultur beimpft und die zweite Kultur in einer Menge von etwa 0,1 bis 10, vorzugsweise 0,5 bis 5 l pro 1 000 l gekühlter Kefirsauermilch zugemischt wird. Je nach den Verfahrensbesonderheiten einzelner Betriebe kann jedoch der optimale Anteil der zu der gekühlten Kefirsauermilch zuzugebenden zweiten Kultur durch laufende Kontrollen ermittelt und festgelegt werden.

In einer ersten Verfahrensstufe wird somit ein beliebiges Milchausgangsmaterial mit den angegebenen definierten Mengen der ersten Kultur beimpft, bis zu einem pH-Wert von etwa 4,5 bis 4,3, vorzugsweise etwa 4,4 bebrütet und danach gekühlt, beispielsweise auf 5 bis 15 °C. Die auf diese Weise hergestellte Kefirsauermilch wird dann mit der getrennt hergestellten zweiten Kultur in dem angegebenen Verhältnis gemischt. Da die erste Kultur auf Temperaturen gekühlt wird, bei denen der neue Hefestamm nur noch geringe Aktivitäten entfaltet, ist die unerwünschte $CO_2$-Bildung weitestgehend reduziert.

Optimale Ergebnisse bezüglich des Säuerungsgrades, der Aromaentwicklung und dem Gehalt an L(+)-Milchsäure werden erzielt, wenn das Milchausgangsmaterial nach dem Beimpfen mit der ersten Kultur etwa 18 bis 22, vorzugsweise 20 Stunden bei etwa 24° bis 27 °C bebrütet wird. Durch laufende Kontrollen war ermittelt worden, daß die geschilderten Vorteile bei diesen Bedingungen am besten in Erscheinung treten.

Die von der ersten Kultur geforderten Eigenschaften werden dann in optimaler Weise erhalten, wenn in dieser ersten Kultur ein Verhältnis von Stäbchen- zu Kokkenbakterien von etwa 1 : 20 vorliegt.

Die Vorteile der erfindungsgemäßen zweiten Kultur zeigen sich idealerweise, wenn die zweite Kultur ein Verhältnis von Stäbchenbakterien zu Hefen von etwa 1 : 1 bis 10 : 1 aufweist. Bei diesem Verhältnis wird der Kompromiß zwischen dem gesetzlichen Erfordernis der Anwesenheit von Hefezellen unter gleichzeitiger Vermeidung der übermäßigen $CO_2$-Bildung mit der unerwünschten Folge von Bombagen bei den Fertigprodukten sehr gut verwirklicht.

Für eine kontrollierte und gut reproduzierbare Herstellung der ersten Kultur empfiehlt es sich besonders, das Milchnährsubstrat nach dem Beimpfen etwa 18 bis 22, vorzugsweise 20 Stunden bei etwa 23° bis 25 °C zu bebrüten. Der genannte, für das Bebrüten von Bakterien vergleichsweise niedrige Temperaturbereich, hat sich empirisch als besonders günstig herausgestellt, da auf diese Weise das erwünschte Verhältnis von Stäbchen- zu Kokkenbakterien von etwa 1 : 20 am sichersten reproduzierbar ist. Das genannte Verhältnis ist seinerseits jedoch wieder verantwortlich für die angestrebte Menge von erwünschter L(+)-Milchsäure und dem erwünschten Aroma. Besonders bevorzugt ist dabei eine Bebrütungsdauer von 20 Stunden.

Das Herstellen der zweiten Kultur erfolgt bevorzugt in der Weise, daß das Milchnährsubstrat etwa 18 bis 22, vorzugsweise 20 Stunden bei etwa 31° bis 33 °C bebrütet wird. Bei dem Herstellen dieser zweiten Kultur wird in erster Linie angestrebt, die erfindungsgemäße Hefe bei einer Temperatur zu vermehren, die für diesen neuen Hefestamm zur Entfaltung maximaler physiologischer Aktivität und Zellteilungsrate besonders günstig ist. Dies ist eine Temperatur von 31° bis 33 °C. Beim Herstellen dieser zweiten Kultur muß somit darauf geachtet werden, daß der eingesetzte, erfindungsgemäße Hefestamm die gewünschte alkoholische Gärung mit voller Aktivität durchführt. In diesem Herstellungsstadium stört die $CO_2$-Bildung nicht, da die Gase aus den Herstellungsgefäßen problemlos entweichen können. In dem für den erfindungsgemäßen Hefestamm optimalen Temperaturbereich wird jedoch das durch die Anwesenheit von Hefezellen im Kefir angestrebte Aroma und der erwünschte Alkoholgehalt des Kefirs im Endprodukt sichergestellt. Da die weitere Aktivität der Hefezellen nach dem Zumischen der zweiten Kultur zu der bereits gesäuerten und dann gekühlten ersteh Kultur vermindert ist, bleibt die unerwünschte, durch die Gasentwicklung hervorgerufene Bombage der Fertigprodukte aus, wobei jedoch gleichzeitig die gesetzlich geforderte Anwesenheit von Hefen sichergestellt ist.

Nach Wunsch kann als Milchausgangsmaterial Sahne oder Vollmilch oder fettarme Milch oder Magermilch verwendet werden.

Entsprechend dem als Milchausgangsmaterial verwendeten Milchprodukt empfiehlt es sich, auch als Milchnährsubstrat. Sahne oder Vollmilch oder fettarme Milch oder Magermilch zu verwenden.

Um Besonderheiten des verwendeten Milchprodukts weitestgehend auszuschalten, empfiehlt es sich, das Milchnährsubstrat und/oder das Milchausgangsmaterial vor dem Beimpfen auf etwa 92 °C zu erhitzen und anschließend auf etwa 25 °C abzukühlen. Durch diese übliche Hitzebehandlung wird der Einfluß von jahreszeitlich oder standortbedingten Anteilen unkontrollierbarer Keime weitestgehend beherrscht.

Die erste und die zweite Kultur können in drei verschiedenen Kulturformen konserviert werden, nämlich als Flüssigkulturkonzentrate, lyophilisierte Trockenkulturen sowie tiefgefrostete Kulturkonzentrate, wobei die Zelldichte dieser Konzentrate etwa im Bereich von $10^8$ bis $10^{12}$ pro ml liegt.

Im folgenden wird das erfindungsgemäße Verfahren in einem Beispiel dargestellt.

### Beispiel

- Herstellung der ersten Kultur, enthaltend kefirspezifische Stäbchen- und Kokkenbakterien :

500 l Vollmilch werden auf 92 °C erhitzt, auf 25 °C abgekühlt und mit 500 ml Flüssigkultur-Konzentrat der ersten Kultur einer Zelldichte von etwa $10^9$/ml beimpft. Das Bebrüten erfolgt 20 Stunden lang bei 23° bis 25 °C. Es wird dabei ein End-pH-Wert von etwa 4,4 erzielt. Das mikroskopische Bild ergibt bei dieser Behandlungsweise ein Verhältnis von Stäbchen : Kokken von etwa 1 : 20. Diese erste Kultur wird dann auf ca. 12 °C gekühlt und kann etwa vier Tage verwendet werden.

- Herstellung der zweiten Kultur, enthaltend Stäbchenbakterien und Hefezellen :

50 l Vollmilch werden auf 92 °C erhitzt und auf 35 °C abgekühlt und sodann mit 50 ml einer Flüssigkultur der zweiten Kultur einer Zelldichte von etwa $10^9$/ml beimpft, 20 Stunden bei 31° bis 33 °C bebrütet, bis ein End-pH-Wert von etwa 3,7 erreicht wird. Das mikroskopische Bild zeigt nach dieser Vermehrung Stäbchen und je Gesichtsfeld etwa fünf Hefezellen. Diese zweite Kultur wird dann auf 12 °C gekühlt und kann sechs Tage lang verwendet werden.

- Herstellung des Kefir-Endprodukts :

Stufe I :

Sahne, Vollmilch, fettarme Milch oder Magermilch wird wie üblich hitzebehandelt, indem das Milchausgangsmaterial auf 92 °C erhitzt und sodann abgekühlt wird. Danach wird mit 2 % der ersten Kultur beimpft und 20 Stunden bei 24° bis 27 °C bebrütet, bis ein End-pH-Wert von etwa 4,4 erreicht ist. Das so erhaltene Kefir-Sauermilchprodukt der Stufe I wird dann auf 12 °C gekühlt.

Stufe II :

Entweder während des Kühlens des Sauermilchprodukts der Stufe I oder bereits in das fertig gekühlte Produkt werden 0,5 bis 5,0 l der zweiten Kultur zu 1 000 l der ersten Kultur zugemischt. Der optimale Anteil der zuzumischenden zweiten Kultur kann in jedem Produktionsbetrieb individuell durch laufende Kontrollen ermittelt und festgelegt werden.

Kefirprodukte, die auf die geschilderte Weise hergestellt wurden, entsprechend den gesetzlichen Anforderungen, die an Kefirprodukte gestellt sind, wobei jedoch die unerwünschte Bombage der Fertigprodukte auf zuverlässige Weise vermieden wird.

## Patentansprüche

1. Verfahren zum Herstellen von Kefir durch Beimpfen eines Milchausgangsmaterials mit Mikroorganismuskulturen, dadurch gekennzeichnet, daß das Milchausgangsmaterial mit einer ersten Kultur, enthaltend allgemein erhältliche, für die Kefirherstellung spezifische, Bakterienstämme der Gattung Streptococcus und Lactobacillus beimpft und bis zu einem End-pH-Wert von etwa 4,5 bis 4,3, vorzugsweise etwa 4,4 bebrütet und danach gekühlt wird und dieser Kefirsauermilch sodann eine als Mischkultur unter der Nr. DSM 2533 hinterlegte, zweite Kultur, enthaltend einen Stamm der Kefirart Candida kefyr und einen Stamm der Bakterienart Lactobacillus brevis zugemischt wird, wobei die erste Kultur hergestellt wird, indem ein Milchnährsubstrat mit einem, die bezüglich der ersten Kultur genannten Stämme enthaltenden Konzentrat einer Zelldichte von etwa $10^8$ bis $10^{12}$ pro ml in einem Volumenverhältnis von etwa 100 : 1 bis 10.000 : 1, vorzugsweise 1.000 : 1 beimpft und bis zu einem End-pH-Wert von 4,5 bis 4,3, vorzugsweise 4,4 bebrütet wird und die zweite Kultur hergestellt wird, indem ein Milchnährsubstrat mit einem, die bezüglich der zweiten Kultur genannten Stämme, die als Mischkultur unter der Nr. DSM 2533 hinterlegt worden sind, enthaltenen Konzentrat einer Zelldichte von etwa $10^8$ bis $10^{12}$ pro ml in einem Volumenverhältnis von etwa 100 : 1 bis 10.000 : 1, vorzugsweise 1.000 : 1 beimpft und bis zu einem End-pH-Wert von etwa 4,0 bis 3,5, vorzugsweise 3,7 bebrütet wird.

2. Verfahren nach Anspruch 1, dadurch gekennzeichnet, daß die allgemein erhältlichen, für die Kefirherstellung spezifischen Bakterienstämme solche der Arten

Streptococcus lactis
Streptococcus cremoris
Streptococcus diacetilactis
Streptococcus thermophilus
Lactobacillus acidophilus
Lactobacillus brevis Typ I und Typ II
Lactobacillus lactis

sind.

3. Verfahren nach Anspruch 1 und/oder Anspruch 2, dadurch gekennzeichnet, daß die erste Kultur hergestellt wird, indem etwa 300 bis 800 l, vorzugsweise 500 l eines Milchnährsubstrates mit etwa 500 ml eines die bezüglich der ersten Kultur genannten Stämme enthaltenden Konzentrats einer Zelldichte von etwa $10^8$ bis $10^{12}$ pro ml beimpft und bis zu einem End-pH-Wert von 4,5 bis 4,3, vorzugsweise 4,4 bebrütet wird und die zweite Kultur hergestellt wird, indem etwa 20 bis 100 l eines Milchnährsubstrats mit etwa 80 ml eines die bezüglich der zweiten Kultur genannten Stämme enthaltenen Konzentrats einer Zelldichte von etwa $10^8$ bis $10^{12}$ pro ml beimpft und bis zu einem End-pH-Wert von etwa 4,0 bis 3,5, vorzugsweise 3,7, bebrütet wird.

4. Verfahren nach mindestens einem der vorhergehenden Ansprüche, dadurch gekennzeichnet, daß das Milchausgangsmaterial mit 1 bis 10 %, vorzugsweise 2 %, der ersten Kultur beimpft und die zweite Kultur in einer Menge von etwa 0,1 bis 10, vorzugsweise 0,5 bis 5 l pro 1 000 l gekühlter Kefirsauermilch zugemischt wird.

5. Verfahren nach mindestens einem der vorhergehenden Ansprüche, dadurch gekennzeichnet, daß das Milchausgangsmaterial nach dem Beimpfen mit der ersten Kultur etwa 18 bis 22, vorzugsweise 20 Stunden, bei etwa 24° bis 27 °C bebrütet wird.

6. Verfahren nach mindestens einem der vorhergehenden Ansprüche, dadurch gekennzeichnet, daß das Verhältnis von Stäbchenbakterien zu Kokkenbakterien in der ersten Kultur etwa 1 : 20 beträgt.

7. Verfahren nach mindestens einem der vorhergehenden Ansprüche, daß das Verhältnis von Stäbchenbakterien zu Hefen in der zweiten Kultur etwa 1 : 1 bis 10 : 1 beträgt.

8. Verfahren nach mindestens einem der vorhergehenden Ansprüche, dadurch gekennzeichnet, daß beim Herstellen der ersten Kultur das Milchnährsubstrat nach dem Beimpfen etwa 18 bis 22, vorzugsweise 20 Stunden, bei etwa 23° bis 25 °C bebrütet wird.

9. Verfahren nach mindestens einem der vorhergehenden Ansprüche, dadurch gekennzeichnet, daß beim Herstellen der zweiten Kultur das Milchnährsubstrat nach dem Beimpfen etwa 18 bis 22, vorzugsweise 20 Stunden bei etwa 31° bis 33 °C bebrütet wird.

10. Verfahren nach mindestens einem der vorhergehenden Ansprüche, dadurch gekennzeichnet, daß als Milchausgangsmaterial Sahne oder Vollmilch oder fettarme Milch oder Magermilch verwendet wird.

11. Verfahren nach mindestens einem der vorhergehenden Ansprüche, dadurch gekennzeichnet, daß als Milchnährsubstrat Sahne oder Vollmilch oder fettarme Milch oder Magermilch verwendet wird.

12. Verfahren nach mindestens einem der vorhergehenden Ansprüche, dadurch gekennzeichnet, daß das Milchnährsubstrat und/oder das Milchausgangsmaterial vor dem Beimpfen auf etwa 92 °C erhitzt und anschließend auf etwa 25 °C abgekühlt wird.

## Claims

1. Process for the preparation of kefir by inoculation of a milk starting material with microorganism cultures, characterized in that the milk starting material is inoculated with a first culture containing generally obtainable bacterial strains of the genus Streptococcus and Lactobacillus which are specific for the preparation of kefir, and is incubated to a final pH of about 4.5 to 4.3, preferably about 4.4, and is then cooled, and thereafter a second culture, which is deposited as mixed culture under the DSM No. 2533, containing a strain of the kefir species Candida kefyr and a strain of the bacterial species Lactocacillus brevis is admixed with this kefir-fermented milk, the first culture being prepared by inoculating a milk nutrient substrate with a concentrate which contains the strains mentioned with reference to the first culture and has a cell density of about $10^8$ to $10^{12}$ per ml in a ratio by volume of about 100 : 1 to 10,000 : 1, preferably 1,000 : 1, and incubating to a final pH of 4.5 to 4.3, preferably 4.4, and the second culture being prepared by inoculating a milk nutrient substrate with a concentrate which contains the strains mentioned with reference to the second culture and deposited as mixed culture under the DSM No. 2533, and has a cell density of about $10^8$ to $10^{12}$ per ml in a ratio by volume of about 100 : 1 to 10,000 : 1, preferably 1,000 : 1, and incubating to a final pH of about 4.0 to 3.5, preferably 3.7.

2. Process according to Claim 1, characterized in that the generally obtainable bacterial strains specific for the preparation of kefir are those of the species

Streptococcus lactis
Streptococcus cremoris
Streptococcus diacetilactis
Streptococcus thermophilus
Lactobacillus acidophilus
Lactobacillus brevis type I and type II
Lactobacillus lactis

3. Process according to Claim 1 and/or Claim 2, characterized in that the first culture is prepared by inoculating about 300 to 800 l, preferably 500 l, of a milk nutrient substrate with about 500 ml of a concentrate which contains the strains mentioned with reference to the first culture and has a cell density of about $10^8$ to $10^{12}$ per ml, and incubating to a final pH of 4.5 to 4.3, preferably 4.4, and the second culture is prepared by inoculating about 20 to 100 l of a milk nutrient substrate with about 80 ml of a concentrate which contains the strains mentioned with reference to the second culture and has a cell density of about $10^8$ to $10^{12}$ per ml, and incubating to a final pH of about 4.0 to 3.5, preferably 3.7.

4. Process according to at least one of the preceding claims, characterized in that the milk starting material is inoculated with 1 to 10 %, preferably 2 %, of the first culture, and the second culture is admixed in an amount of about 0.1 to 10, preferably 0.5 to 5 l per 1,000 l of cooled kefir-fermented milk.

5. Process according to at least one of the preceding claims, characterized in that the milk starting material is, after inoculation with the first culture, incubated at about 24° to 27 °C for about 18 to 22, preferably 20, hours.

6. Process according to at least one of the preceding claims, characterized in that the ratio of rod-shaped bacteria to cocci in the first culture is about 1 : 20.

7. Process according to at least one of the preceding claims, characterized in that the ratio of rod-shaped bacteria to yeasts in the second culture is about 1 : 1 to 1 : 20.

8. Process according to at least one of the preceding claims, characterized in that in the preparation of the first culture the milk nutrient substrate is incubated at about 23° to 25 °C for about 18 to 22, preferably 20, hours after the inoculation.

9. Process according to at least one of the preceding claims, characterized in that in the preparation of the second culture the milk nutrient substrate is incubated at about 31° to 33 °C for about 18 to 22, preferably 20, hours after the inoculation.

10. Process according to at least one of the preceding claims, characterized in that cream or whole milk or low-fat milk or skimmed milk is used as milk starting material.

11. Process according to at least one of the preceding claims, characterized in that cream or whole milk or low-fat milk or skimmed milk is used as milk nutrient substrate.

12. Process according to at least one of the preceding claims, characterized in that the milk nutrient substrate and/or the milk starting material is heated to about 92 °C before inoculation and is then cooled to about 25 °C.

**Revendications**

1. Procédé pour fabriquer du képhyr par ensemencement d'une matière de départ lactée avec des cultures de micro-organismes, procédé caractérisé en ce qu'on ensemence la matière de départ lactée avec une première culture qui contient des souches bactériennes des genres Streptococcus et Lactobacillus qui sont spécifiques de la fabrication du képhyr et qui peuvent être obtenues d'une manière générale, on fait incuber jusqu'à un pH final d'environ 4,5 à 4,3, de préférence d'environ 4,4, puis on refroidit, et on ajoute ensuite à ce lait caillé pour képhyr une seconde culture qui contient une souche de l'espèce pour képhyr Candida kefyr et une souche de l'espèce bactérienne Lactobacillus brevis, qui a été déposée comme culture mixte sous le n° DSM 2533, la première culture ayant été préparée par ensemencement d'un substrat nutritif lacté avec un concentré qui contient les souches mentionnées à propos de la première culture et qui a une densité cellulaire d'environ $10^8$ à $10^{12}$ par millilitre, dans un rapport volumique d'environ 100 : 1 à 10 000 : 1, de préférence de 1 000 : 1, et par incubation jusqu'à un pH final de 4,5 à 4,3, de préférence de 4,4, et la seconde culture ayant été préparée par ensemencement d'un substrat nutritif lacté avec un concentré contenant les souches mentionnées à propos de la seconde culture, déposées comme culture mixte sous le n° DSM 2533, et dont la densité cellulaire est comprise entre environ $10^8$ à $10^{12}$ par millilitre, dans un rapport volumique d'environ 100 : 1 à 10 000 : 1, de préférence de 1 000 : 1, et par incubation jusqu'à un pH final d'environ 4,0 à 3,5, de préférence de 3,7.

2. Procédé selon la revendication 1 caractérisé en ce que les souches bactériennes qui sont spécifiques de la fabrication du képhyr et qui peuvent être obtenues d'une manière générale sont des souches des espèces suivantes :

Streptococcus lactis
Streptococcus cremoris
Streptococcus diacetilactis
Streptococcus thermophilus
Lactobacillus acidophilus
Lactobacillus brevis type I et type II
Lactobacillus lactis.

3. Procédé selon l'une des revendications 1 et 2, caractérisé en ce qu'on prépare la première culture en ensemençant d'environ 300 à 800 litres, de préférence 500 litres, d'un substrat nutritif lacté avec environ 500 ml d'un concentré qui contient les souches mentionnées à propos de la première culture et qui a une densité cellulaire d'environ $10^8$ à $10^{12}$ par millilitre et en faisant incuber jusqu'à un pH final de 4,5 à 4,3, de préférence de 4,4, et en ce qu'on prépare la seconde culture en ensemençant d'environ 20 à 100 litres d'un substrat nutritif lacté avec environ 80 ml d'un concentré qui contient les souches mentionnées à propos de la seconde culture et qui a une densité cellulaire d'environ $10^8$ à $10^{12}$ par millilitre et en faisant incuber jusqu'à un pH final d'environ 4,0 à 3,5, de préférence de 3,7.

4. Procédé selon une ou plusieurs des revendications précédentes, procédé caractérisé en ce qu'on ensemence la matière de départ lactée avec de 1 à 10 % de la première culture, de préférence 2 %, et on ajoute la seconde culture en une quantité d'environ 0,1 à 10 litres, de préférence de 0,5 à 5 litres, pour 1 000 litres de lait caillé pour képhyr refroidi.

5. Procédé selon une ou plusieurs des revendications précédentes, procédé caractérisé en ce qu'après avoir ensemencé la matière de départ lacté avec la première culture on la fait incuber pendant 18 à 22 heures, de préférence pendant 20 heures, à une température d'environ 24 à 27 °C.

6. Procédé selon une ou plusieurs des revendications précédentes, caractérisé en ce que le rapport entre les bactéries du type bâtonnets (bacilles) et les bactéries du type cocci dans la première culture est d'environ 1 : 20.

7. Procédé selon une ou plusieurs des revendications précédentes, caractérisé en ce que le rapport entre les bactéries du type bâtonnets et les levures dans la seconde culture est compris entre environ 1 : 1 et 10 : 1.

8. Procédé selon une ou plusieurs des revendications précédentes, caractérisé en ce qu'au cours de la préparation de la première culture on fait incuber le substrat nutritif lacté, après l'ensemencement, pendant environ 18 à 22 heures, de préférence pendant 20 heures, une température d'environ 23 à 25 °C.

9. Procédé selon une ou plusieurs des revendications précédentes, caractérisé en ce qu'au cours de la préparation de la seconde culture on fait incuber le substrat nutritif lacté, après l'ensemencement, pendant une durée d'environ 18 à 22 heures, de préférence de 20 heures, à une température d'environ 31 à 33 °C.

10. Procédé selon une ou plusieurs des revendications précédentes, caractérisé en ce qu'on utilise, comme matière de départ lactée, de la crème, du lait entier, du lait pauvre en corps gras ou du lait écrémé.

11. Procédé selon une ou plusieurs des revendications précédentes, caractérisé en ce qu'on utilise, comme substrat nutritif lacté, de la crème, du lait entier, du lait pauvre en corps gras ou du lait écrémé.

12. Procédé selon une ou plusieurs des revendications précédentes, caractérisé en ce que, avant l'ensemencement, on chauffe à environ 92 °C le substrat nutritif lacté et/ou la matière de départ lactée, puis on refroidit à environ 25 °C.